# EUROPEAN PATENT APPLICATION

(11) **EP 1 553 541 A2**
(43) Date of publication of application: **13.07.2005**
(21) Application number: 04258200.7
(22) Date of filing: 31.12.2004
(51) Int. Cl.: G08C 19/28

(54) **Electronic device**

(30) Priority: 06.01.2004 JP 2004001324
(71) Applicant: SONY CORPORATION, Tokyo 141 (JP)
(72) Inventor: Takenaka, Yoshiaki, c/o Sony Corporation, Tokyo (JP)
(74) Representative: Robinson, Nigel Alexander Julian

(57) **Abstract**

Usability of a remote controller attached to a variety of electronic devices is improved.

An electronic device that operates when receiving a remote-control signal from a remote controller includes a control unit which.discriminates a device category and a code within the category of the remote-control signal received by a receiving unit and when the first device category code and the second device category code that are registered in advance are discriminated, the control unit judges each of the received codes to be efficient and issues a control command corresponding to the judged code, which controls operation within the device.

## Description

The present invention relates to an electronic device suitable to be applied to, for example, an audio device, a video device and the like, and particularly relates to an electronic device that can be remotely controlled by a remote controller.

Conventionally, a number of such electronic devices, such as a video device of a television receiver, an audio device and the like have been known, to which a remote controller (remote-control commander) that can remotely control the device (to be controlled) is attached. Hereupon, data transmission between a remote controller and the device to be controlled is conventionally performed by wireless transmission of infrared signals.

With respect to the remote controller, conventionally a controller of exclusive use for each device to be controlled is attached to the device and delivered to the user. In this case, a data code wirelessly transmitted from the remote controller to the device to be controlled is different depending on a kind of device. Further, a data code wirelessly transmitted is completely different in each manufacturing company that manufactures each device to be controlled, and for example an infrared signal code for the remote control of a television receiver manufactured by a company A and an infrared signal code for the remote control of a television receiver manufactured by a company B are completely different.

In order to cope with the above circumstances of each manufacturer employing a different code, a remote controller has been developed in which a plurality of codes used by respective manufacturers are stored, for example, and an infrared signal of a specific code selected from the plurality of codes of respective manufacturers can be transmitted, so that one remote controller can be used as a remote controller for a plurality of electronic devices manufactured by different companies. Patent document 1 discloses a remote controller in which a plurality of codes can be stored.

### [Patent document 1] Japanese Published Patent Application No. H5-252576

However, conventionally the above described remote controller that can transmit a plurality of codes is independently sold separately from a remote controller attached to each device, sc that the user is required to purchase further the remote controller that operates corresponding to the plurality of codes. Specifically, when assuming a circumstance in which for example a user purchases a television receiver, one remote controller exclusively used for the television receiver is conventionally attached thereto. Hereupon, in the case where the user who has purchased the television receiver needs to have two remote controllers, another remote controller that can transmit the code corresponding to the television receiver needs to be purchased. Even if the user already had a remote controller for another television receiver previously used, the remote controller cannot be used for the television receiver newly purchased when the previously used television receiver was manufactured by a different company from the manufacturer of the remote controller currently used, because an infrared signal to be transmitted is different.

Accordingly, at present there remains a problem that a remote controller already possessed by the user has not been efficiently used.

Furthermore, the following problem also exists with respect to a remote controller. That is, at present a code transmitted from a remote controller is conventionally different between devices manufactured by the same manufacture if a device category is different, even though the devices have the same functions. This is efficient in view of preventing malfunction of each device; however it is inconvenient for some users depending on the way of use. For example, in the case where a video signal and audio signal processing device termed an AV (Audio Visual) amplifier is connected to a television receiver to have a configuration in which input switching and other operation are performed in the AV amplifier, when input switch keys arranged on a remote controller for the television receiver is pressed, only input switching inside the television receiver is performed and input switching in the AV amplifier cannot be performed. Input switching of the AV amplifier cannot be attained without a remote controller supplied with the AV amplifier.

Accordingly, under the above circumstances, two remote controllers for the television receiver and for the AV amplifier need to be used individually, which is greatly inconvenient for the user. Furthermore, each of the two remote controllers has keys of the same functions such as input switching, volume control and the like, so that there remains difficulty for the user in selecting an appropriate key to perform control.

Note that explanation in the above is made with respect to an example of a remote controller of a television receiver; however, the same problems exist in a remote controller attached to various kinds of electronic device.

The present invention is made in view of the above problems and aims to improve usability of a remote controller.

The present invention provides an electronic device that operates by a remote-control signal from a remote controller, including a control unit which discriminates a device category of the remote-control signal received by a receiving unit and a code within the category and which, when a first device category code and a second device category code registered in advance are discriminated, judges each of the received codes to be efficient and issues a control command to control an operation within the device, which corresponds to the discriminated code.

Accordingly, when receiving a remote control signal of the first device category code, a control command based on the first code is issued to perform a corresponding operation control; and when receiving a remote control signal of the second device category code different from the first device category code, similarly a control command based on the second code is issued to perform a corresponding operation control, so that signals from remote controllers of two different device categories can be received and processed.

According to the present invention, remote-control signals of a plurality of device category codes can be received by one device and the operation based on each remote-control signal code can be performed, so that a plurality of remote controllers whose device categories are different can be prepared to perform the remote control by each controller on the device, and for example remote controllers already possessed by the user can efficiently be used.

Hereupon, the first device category is a device category assigned to the relevant device and the second device category is a device category assigned to another kind of device, so that a remote controller for a device of another category can be used as a remote controller of the relevant device.

Further, with respect to the second device category code, only a part of the code is discriminated to be efficient, so that only the code of preferable functions to be shared between the first and second device categories can efficiently be used.

Furthermore, the second device category code discriminated to be efficient as described above includes at least a code indicating input switching of video signals and/or audio signals, so that input switching of another video device or the like can be performed using, for example, an input switch key provided in a remote controller for a television receiver.

Moreover, the second device category code discriminated to be efficient includes at least a code indicating control of turning the volume up and of turning the volume down, so that sound volume reproduced in another audio device or the like can be controlled using, for example, a key indicating to turn the volume up and down which is provided in a remote controller for a television receiver.

Embodiments of the invention will now be described, by way of example only, with reference to the accompanying drawings in which:
FIG. 1 is a constitutional diagram showing an example of a system configuration according a first embodiment of the present invention;
FIG. 2 is a block diagram showing an example of a configuration of an AV amplifier according to the first embodiment of the present invention;
FIG. 3 is an explanatory view showing an example of a remote-control signal according to the first embodiment of the present invention;
FIG. 4 is a flow chart showing an example of processing when input switch operation according to the first embodiment of the present invention is performed;
FIG. 5 is a flow chart showing an example of processing of setting switch of reception processing category according to the first embodiment of the present invention;
FIG. 6 is an explanatory view showing an operation example of each mode according to the first embodiment of the present invention; and
FIG. 7 is a block diagram showing an example of a configuration of a television receiver according to a second embodiment of the present invention.

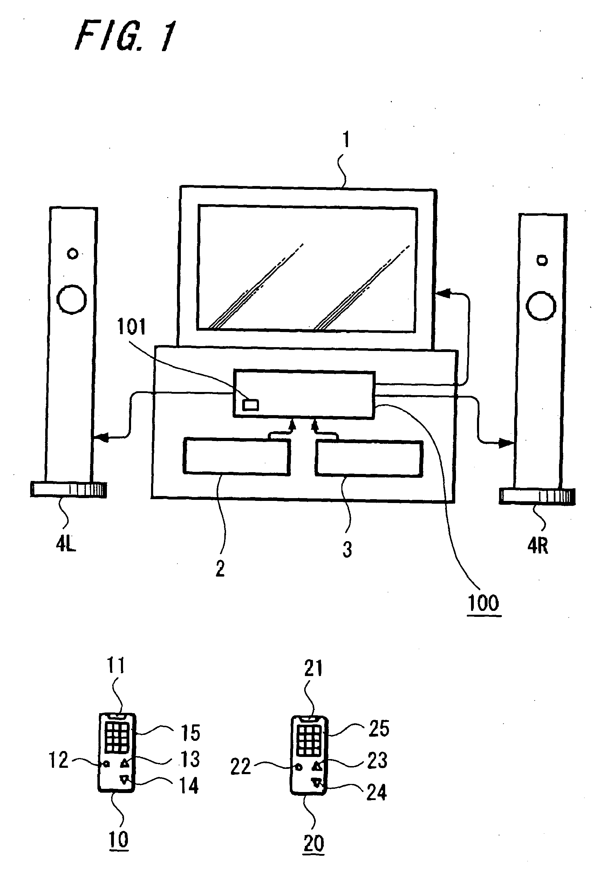

Hereinafter, a first embodiment of the present invention will be explained referring to FIGS. 1 through 6.

FIG. 1 is a diagram showing an example of a system configuration of the first embodiment. In this embodiment, an AV amplifier 100 is provided, a plurality of video signal sources are connected to the AV amplifier 100, and input selection of selecting one of the plurality of video signal sources is performed by the AV amplifier 100. Then, a video signal supplied to the AV amplifier 100 from the selected input device is supplied to a television receiver 1 to be displayed, and an audio signal is output (emitted) from right and left speaker devices 4R and 4L connected to the AV amplifier.

FIG. 1 shows an example in which a video reproducing device 2 (videotape reproducing device, videodisc reproducing device or the like) and a tuner 3 (satellite broadcasting tuner, CS broadcasting tuner or the like) are provided as video signal sources. It should be noted that in the example of the system configuration of FIG. 1 the television receiver 1 is used only as a means to display video in the state in which the input from the AV amplifier 100 is selected in the television receiver 1, and no audio signals are supplied to the television receiver 1 from the AV amplifier 100.

The AV amplifier 100 is provided with an infrared signal receiving unit 101 and when receiving an infrared signal from a remote controller 10 exclusively used for the AV amplifier 100, processing of a code indicated by the infrared signal is performed. Further in this embodiment, when receiving an infrared signal from a remote controller 20 for the television receiver 1, part of processing of a code indicated by the infrared signal is performed. Specific explanation with respect to this processing will be described later on.

The remote controller 10 for the AV amplifier includes an infrared signal emitting unit 11 and an input switch key 12, a volume up key 13, a volume down key 14 and the other keys 15 are arranged, and in accordance with the operation of those keys, an infrared signal of a corresponding code is transmitted (emitted) from the infrared signal emitting unit 11. In this case, device category data indicating the AV amplifier is added to the transmitted infrared signal.

The remote controller 20 for the television receiver includes an infrared signal emitting unit 21 and an input switch key 22, a volume up key 23, a volume down key 24 and the other keys 25 are arranged, and in accordance with the operation of those keys, an infrared signal of a corresponding code is transmitted (emitted) from the infrared signal emitting unit 21. In this case, device category data indicating the television receiver is added to the transmitted infrared signal.

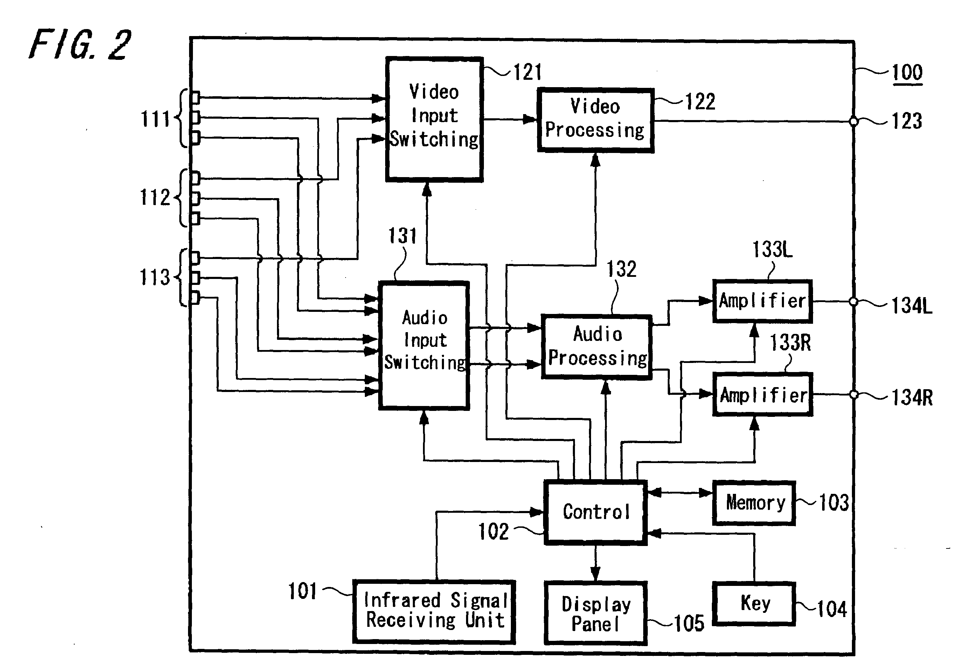

Next, referring to FIG. 2 the configuration of the AV amplifier 100 according to this embodiment will be explained. The AV amplifier 100 according to this embodiment is provided with a plurality of input terminal sets 111, 112 and 113. Each input terminal set includes three input terminals of a video signal, an audio signal of the right channel and an audio signal of the left channel. In the system configuration shown in FIG. 1, for example, output terminals of a video signal and an audio signal of the video reproducing device 2 are connected to the input terminal set 111 via a predetermined cable and output terminals of a video signal and an audio signal of the tuner 3 are connected to the input terminal set 112 via a predetermined cable.

Video signals obtained at each video signal input terminal of the input terminal sets 111, 112 and 113 are supplied to a video input switching unit 121 and based on the control from a control unit 102 any one of the inputs is selected. The selected video signal is supplied to a video processing unit 122 and video processing is performed if necessary. For example, such processing as to obtain a higher picture quality, to superimpose some characters or the like is performed. The video processing unit 122 is not necessarily required. Subsequently the video signal output from the video processing unit 122 (from the video input switching unit 121 when the video processing unit 122 not included) is supplied to a video signal output terminal 123.

Audio signals obtained at each of the right and left audio signal input terminals of respective input terminal sets 111, 112 and 113 are supplied to an audio input switching unit 131 and based on the control from the control unit 102 any one of the inputs is selected. Basically, an input terminal selected this time is included in the same input terminal set whose video signal is selected in the video input switching unit 121. The selected audio signal is supplied to an audio processing unit 132, where audio processing is performed if necessary. For example, sounds of high range and of low range are enhanced. Then, the audio signal output from the audio processing unit 132 is supplied individually to right and left channel amplifiers 133R and 133L to be amplified. The amplifying state is set based on volume control data supplied from the control unit 102. The audio signals amplified in the amplifiers 133R and 133L are supplied to output terminals 134R and 134L for respective channels and are output from the speaker devices connected to the output terminals 134R and 134L (speaker devices 4R and 4L shown in FIG. 1)

Infrared signal (remote-control signal) data received by the infrared signal receiving unit 101 is supplied to the control unit 102 in the AV amplifier 100, and based on a code discriminated from the data the control unit 102 performs operation control processing with respect to each unit within the AV amplifier 100. In this embodiment, a memory 103 is connected to the control unit 102 and stores data and programs necessary for the control. Data with respect to a remote-control signal code and a device category received by the AV amplifier 100 are examples of data stored in the memory 103.

Further, on the front panel of the AV amplifier 100 a plurality of keys 104 are arranged, and the operation data by the keys 104 is supplied to the control unit 102, and various operations such as input switching can also be performed by means of the keys 104. Furthermore, a display panel 105 is provided to display operation states (such as input selection state) by the control of the control unit 102.

Hereupon, explanation is made to remote-control signal data stored in the memory 103 in the AV amplifier 100 according to this embodiment; in the memory 103 are stored a device category that is set for the AV amplifier and data indicating correspondence of a operational code within the device category to an operational function. Further, in the memory 103 is provided an area to store other device categories than that of the AV amplifier and operational codes thereof. As described later on, in this embodiment a device category of the television receiver and part of an operational code within the device category are stored in the area. Whether a remote-control signal of the device category and the code thereof stored in this area is received or not can be selected through the mode setting operation or the like. The mode setting will be described in detail later on.

In addition, the area in the memory 103 to store other remote-control signals than that of the AV amplifier, for example, can be provided as a rewritable storage area (data on the remote-control signal regarding the AV amplifier is a non-rewritable storage area), in which other device categories and operational codes than those of the AV amplifier may be changed according to settings by the user. Alternatively, a plurality of device categories and codes other than those of the AV amplifier are stored in the memory 103 in advance, and the device category and code that can be used (that is, the category and code discriminated by the control unit 102) may be selected according to the settings by the user.

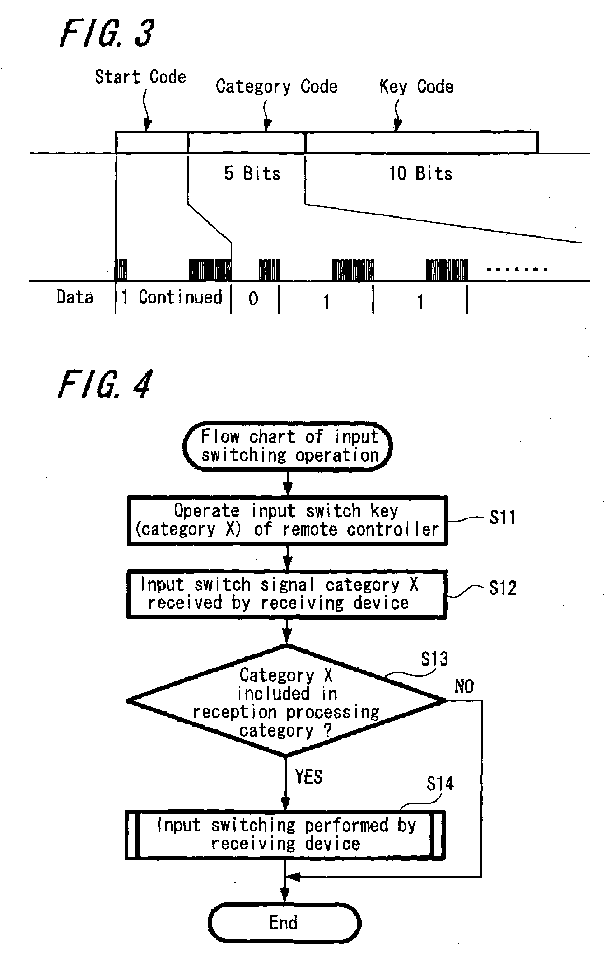

FIG. 3 is a diagram showing an example of the configuration of a remote-control signal as an infrared signal received by the AV amplifier 100 of this embodiment. In this example, data 0 and data 1 are transmitted in a pulse transmitting cycle of a predetermined frequency and as shown in FIG. 3, at first data 1 is continuously transmitted for a predetermined period of time as a start code, subsequently a category code constituting five bits is transmitted, and at last a key code constituting 10 bits is transmitted. The start code is a code that is necessarily transmitted when transmitting a remote-control signal by means of infrared transmission. The category code is a device code indicating a device to which the remote-control signal to be transmitted corresponds.

In the case of the remote controller 10 for the AV amplifier, this category code is of the AV amplifier code and the same AV amplifier category code is added to the remote-control signal transmitted from the remote controller 10 without exception. In the case of the remote controller 20 for the television receiver, this category code is of the television receiver code and the same television receiver category code is added to the remote-control signal transmitted from the remote controller 20 without exception.

The key code is a code assigned correspondingly to keys 12 to 15 and keys 22 to 25 arranged in the remote controllers 10 and 20, respectively. For example, a key code corresponding to the input switch key, a key code corresponding to the volume up key and a key code corresponding to the volume down key are assigned. In the case of the key code corresponding to the input switch key, the code is either indicating the input position to be switched to the next position or indicating directly the input position such as input 1. Note that even with respect to the same function the same code is not necessarily assigned, when the device category is different.

Next, using the AV amplifier 100 of this embodiment, an example of processing operation when the system is configured as shown in FIG. 1 is explained. First, an example of processing of received data based on the judgment in the control unit 102 when the infrared signal receiving unit 101 of the AV amplifier 100 receives an infrared signal will be explained referring to the flow chart of FIG. 4. In the example of FIG. 4, the input switching operation of the AV amplifier 100 is performed. The input switching processing is the processing of selecting the input in the video input switching unit 121 and in the audio input switching unit 131 within the AV amplifier 100 in the system configuration shown in FIG. 1 and the processing of switching (selecting) between the video reproducing device 2 and the tuner 3.

Processing is explained in accordance with the flow chart of FIG. 4; first, an input switch key of a remote controller held by a user is operated in the vicinity (within the reaching range of an infrared signal) of the AV amplifier 100 (step S11). For example, the input switch key 12 in the remote controller 10 for the AV amplifier is pressed. Hereupon, the device category set in the remote controller operated at this time is assumed to be X.

With the above operation of the remote controller, the remote-control signal which indicates input switching of the operational code in the device category X is transmitted, and the remote-control signal is received by the infrared signal receiving unit 101 in the AV amplifier 100 (step S12). When the remote-control signal is received, the control unit 102 judges whether the received device category X is included in the reception processing category currently set (step S13). When the device category X is not included in the reception processing category currently set, the control unit 102 performs no processing with respect to the received remote-control signal. When the device category X is included in the reception processing category currently set, the control unit 102 outputs the control command to perform the input switching in the video input switching unit 121 and in the audio input switching unit 131, and the relevant input switching is performed (step S14).

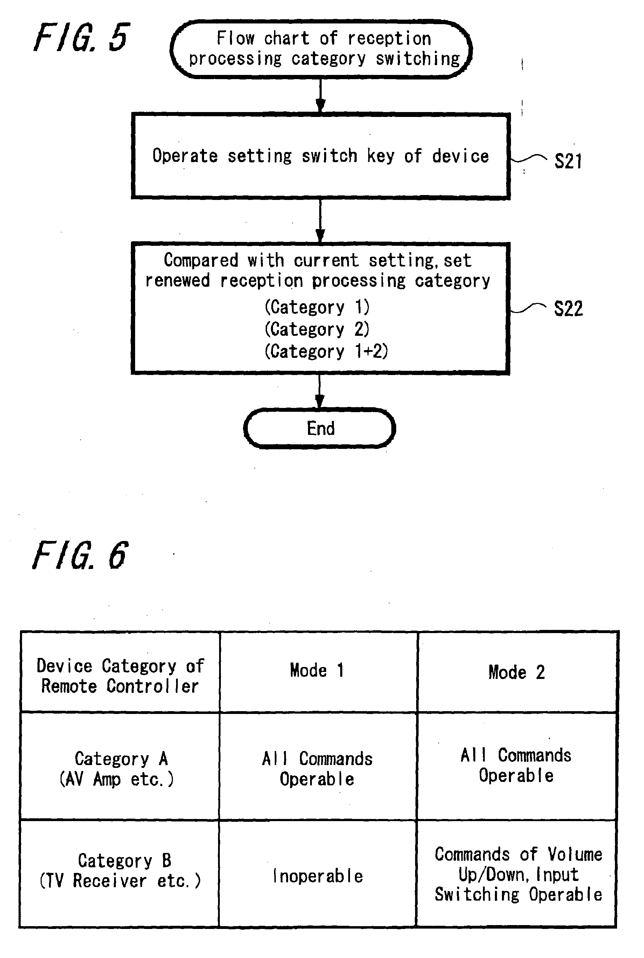

Here, settings with respect to the device category that can be received by the AV amplifier 100 of this embodiment will be explained. FIG. 5 is a flow chart showing an example of the device category setting processing. First, a specific key (setting switch key) among the keys 104 in the AV amplifier 100 is operated (step S21), and setting (change) of the device category is indicated. Upon this operation, the control unit 102 sets a renewed reception processing category, comparing with the currently set value (set category) (step S22). The newly set device category may be displayed on the display panel 105 with characters and marks.

For example, in the case where data with respect to the device categories 1 and 2 are stored in the memory 103, three modes of: receiving the device category 1 to be processed, receiving the device category 2 to be processed, and receiving both the device categories 1 and 2 to be processed can be set.

The device category of its own may be set to be received and processed without exception. Specifically, in the case of the AV amplifier 100, the remote-control signal transmitted from the remote controller 10 exclusively used for the AV amplifier can always be received and processed, and with respect to other device categories than that, both the case in which reception processing can be performed and the case in which receiving and processing cannot be performed may be set.

Further, with respect to the remote-control signal of a different category from the device category of its own, only a command code that indicates specific operations can be set to be judged to be efficient. That is, in the case of the system configuration shown in FIG. 1, modes 1 and 2 are set as the codes to process a remote-control signal in the AV amplifier 100, as shown in FIG. 6. Then, with respect to the remote-control signal transmitted from the remote controller 10 exclusively used for the AV amplifier (device category A in FIG. 6), all the command code can be judged to be efficient in both the modes 1 and 2 and corresponding processing is performed by the control of the control unit 102. Further, with respect to the remote-control signal transmitted from the remote controller 20 for the television receiver, operation can be performed only when the mode 2 is set, in which only the code transmitted by the operation of the input switch key 22, volume up key 23 and volume down key 24 can be made efficient as a function to be operated, and when the other function code is transmitted, processing in the AV amplifier 100 is not operated.

As shown in FIG. 6, when the mode 2 is set as the configuration to set a mode, the operation of the AV amplifier 100 can be performed not only by the remote controller 10 exclusively used for the AV amplifier, but also by the remote controller 20 for the television receiver, so that the remote controller for the television receiver can be used efficiently and usability is improved. Specifically, the input switch key and volume control keys are arranged in each of the remote controller 10 for the AV amplifier and the remote controller 20 for the television receiver, and when a user watches and listens to a video program using the system shown in FIG. 1, the user conventionally needs to confirm the input switch key and volume control keys that should be selected between the two remote controllers. However, in this embodiment similar operation can be performed when either of the two remote controllers is operated, so that a user need not be concerned with selecting a key of the same function in the two remote controllers.

Further, when the mode 2 is selected in the settings shown in FIG. 6 and the volume control keys and the input switch key of the remote controller 20 for the television receiver are operated, a remote-control signal corresponding to the key operation is also received on the side of the television receiver 1 in the system configuration of FIG. 1 and the corresponding operation is performed. If that is inconvenient, the volume control command and the input switch command may be set to be invalid in the television receiver 1, when selecting the input from the AV amplifier 100. Note that under the condition that the AV amplifier 100 is used in the system configuration of FIG. 1, the AV amplifier 100 and the television receiver 1 are not connected with an audio cable, so that if the television receiver 1 receives the volume control command, no processing is performed (even if the processing is operated, volume up/down is only executed in silence). Further, with respect to the input switching, in the state in which the input from the AV amplifier 100 is selected, such processing as fixing the input may be performed, for example, and by the command from the remote controller 20 the input switching may be prohibited. in the television receiver 1.

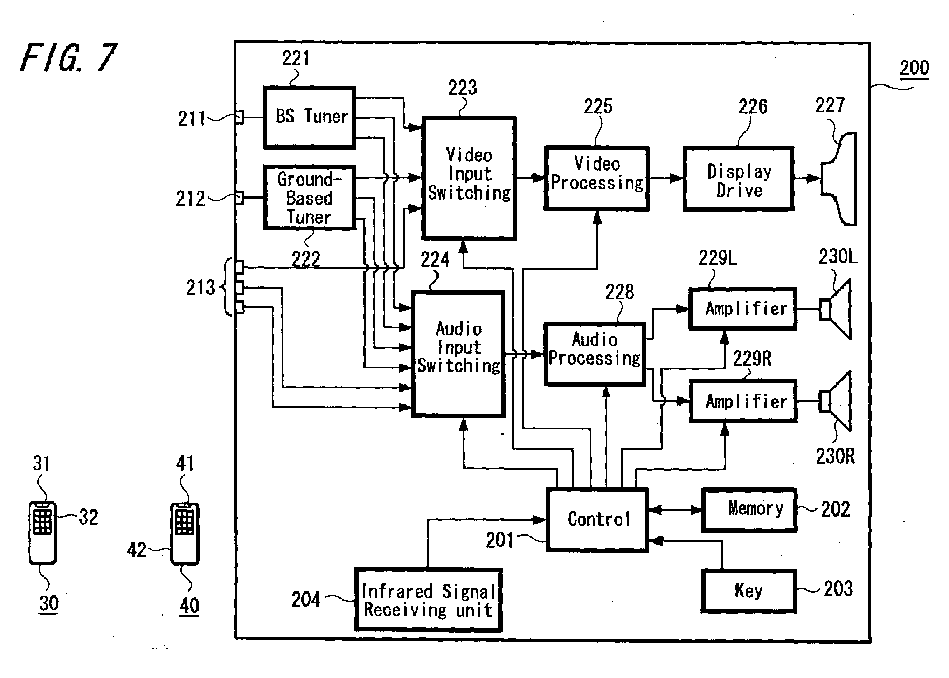

Next, a second embodiment of the present invention will be explained referring to FIG. 7. In this embodiment, a television receiver 200 is provided and is made to operate not only by a remote-control signal from a remote controller 30 exclusively used for the television receiver 200, but also by a remote-control signal from a remote controller 40 used for another television receiver. Hereupon, it is assumed that the television receiver 200 and remote controller 30 are manufactured by a company A and that the remote controller 40 is manufactured by another company B. Basically, both the remote-control signals (infrared signals) transmitted from the remote controller manufactured by the company A and transmitted from the remote controller manufactured by the company B are similar to the remote-control signal shown in FIG. 3 and at least include a device category code and a key code, in which the period of each code, the number of bit and so on are different among respective companies.

First, the configuration of the television receiver 200 of this embodiment is explained referring to FIG. 7. The television receiver 200 is provided with antenna terminals 211 and 212, and an antenna used for the satellite broadcasting (BS) is connected to the antenna terminal 211 and a signal from the antenna is received and processed by a BS tuner 221. An antenna used for ground-based broadcasting is connected to the antenna terminal 212, and a signal from the antenna is received and processed by a ground-based broadcasting tuner 222. Channels to be received and so on are controlled by a control unit 201. Video signals received by each of the tuners 221 and 222 are supplied to a video input switching unit 223 together with video signals obtained at an outside input terminal 213, any one of which is selected in the video input switching unit 223. Similarly, audio signals received by each of the tuners 221 and 222 are supplied to an audio input switching unit 224 together with audio signals obtained at the outside input terminal 213, any one of which is selected in the audio input switching unit 224. Selecting operation in respective input switching units 223 and 224 is controlled by the control unit 201.

The video signal selected in the video input switching unit 223 is supplied to a video processing unit 225, where video processing for display is performed. For example, video processing to obtain a high picture quality, processing to superimpose characters, numbers and the like, and so on are performed. The output from the video processing unit 225 is supplied to a display drive unit 226, where drive processing is performed to display the video in a display unit 227. Various kinds of video display means such as a cathode ray tube and a liquid-crystal display panel can be used as the display unit 227.

The audio signal selected in the audio input switching unit 224 is supplied to an audio processing unit 228, where audio processing to output the audio is performed. For example, surround processing to reproduce audio stereophonically is performed. The output from the audio processing unit 228 is supplied to amplifiers 229R and 229L of right and left channels separately and is amplified based on the volume control state, the output of which is supplied to speakers 230R and 230L of right and left channels to be output (emitted). Processing of those video signals and audio signals are performed by the control of the control unit 201.

A memory 202 is connected to the control unit 201 and stores data and programs necessary for the control. Data with respect to a code and a device category of a remote-control signal received by the television receiver 200 is one of the data to be stored in the memory 202. In this embodiment, a plurality of device categories and data on the categories are stored in memory 202. Hereupon, all the device categories stored are categories of television receivers and not only the data on the code and device category of the company A that is the manufacturer of the television receiver 200, but also data on codes and device categories of other manufactures such as company B, company C.... are stored. Further, if data (such as data on the difference in the start code) is required for receiving and discriminating remote-control signals of other manufacturers, the relevant data is also stored in the memory 202.

Furthermore, in the memory 202 of the television receiver 200, part of a storage area to store the data regarding the remote-control signal may be provided as a rewritable storage area and categories and codes may be stored by the setting operation of the user.

Further, the television receiver 200 of this embodiment includes keys 203 and infrared signal receiving unit 204, and the operation of the keys 203 is judged by the control unit 201 to enable various operations to be performed and the signal received by the infrared signal receiving unit 204 is judged by the control unit 201 to perform various operations.

Two remote controllers 30 and 40 have infrared signal transmitting units 31 and 41, respectively, and each transmit a remote-control signal having a configuration set by each manufacture of the remote controllers by the operation of the arranged keys 32 and 42.

Further, when performing operation control based on the remote-control signal received by the infrared signal receiving unit 204, the control unit 201 of the television receiver 200 can select the reception processing category. Specifically, as explained in the flow chart of FIG. 5 according to the first embodiment of the present invention, selection can be made among a mode in which operation can be performed with the category set in the remote controller 30 (category 1), a mode in which operation can be performed with the category set in the remote controller 40 (category 2) and a mode in which operation can be performed with both the categories respectively set in the two remote controllers 30 and 40 (categories 1 and 2). The mode selection can be performed by the operation of the specific key 203, for example.

In this embodiment, each of the remote controllers 30 and 40 is a remote controller used for a television receiver, so that basically most of the keys can be set to perform functions assigned; however, remote-control signals with respect to part of functions that are specific to and different in each manufacture are set to ignore if received.

With the above described configuration, one television receiver can be operated by a plurality of remote controllers manufactured by different companies. Accordingly, in the case where a user possesses the remote controller 40 for the television receiver that was manufactured by the company B and was previously used by the user, with setting a mode in which operation by two different categories can be performed, not only the remote controller 30 exclusively used for the television receiver 200 but also the remote controller 40 can be used, so that remote controllers possessed by a user can be efficiently used.

In this case, when data with respect to the remote-control signal in memory 202 is configured to be rewritable and what is called a learning function, in which a remote-control signal is stored in the memory 202 by the settings of each user, is provided, a remote controller having any code configuration possessed by a user can be used, so that remote controllers can be used more efficiently. Further, in the case in which a remote-control signal is stored in the memory 202 by the learning function, the remote-control signal received by the infrared signal receiving unit 204 is stored by each command without any operation, and no analysis of a device category and the like is performed by the control unit 201; however, basically the device category and the code of each command are included in the stored data, so that the same processing as the processing in which a device category and a code is separately stored can be performed.

It should be noted that in the embodiments described above, an example in which the system is configured using an AV amplifier and a television receiver and an example in which only a television receiver is used are explained; however needless to say in an electronic device having another configuration, one device can also be configured to receive remote-control signals of a plurality of device categories. Basically, the present invention can be applied to any electronic device as long as the device operates upon receiving a remote-control signal.

Further, as explained in the first embodiment, when remote-control signals of a plurality of device categories are made to correspond, with respect to one of the remote-control signals a volume control command and an input switch command are referred to as examples when restricted to part of the cord; however, restriction can be performed to make the other commands efficient.

Furthermore, in the above described embodiments an example is referred to, in which the present invention is applied to a device that wirelessly transmits a remote-control signal as an infrared signal; however, the present invention can be applied to the case in which remote-control signals are transmitted using other transmission methods.

Having described preferred embodiments of the invention with reference to the accompanying drawings, it is to be understood that the invention is not limited to those precise embodiments and that various changes and modifications could be effected therein by one skilled in the art without departing from the scope of the invention as defined in the appended claims.

## Claims

1. An electronic device comprising:
a receiving unit to receive a remote-control signal;
a control unit which discriminates a device category of the remote-control signal received by said receiving unit and a code within the category and which, when a first device category code and a second device category code that are registered in advance are discriminated, judges each of the received codes to be efficient and issues a control command corresponding to the judged code; and
a processing unit which performs operation based on the control command of said control unit.

2. An electronic device according to claim 1, wherein
said first device category is a device category assigned to the relevant device and said second device category is a device category assigned to another kind of device.

3. An electronic device according to claim 2, wherein
only a part of the code is judged to be efficient with respect to said second device category code.

4. An electronic device according to claim 3, wherein
said second device category code judged to be efficient includes at least a code of indicating input switching of a video signal and/or an audio signal.

5. An electronic device according to claim 3, wherein
said second device category code judged to be efficient includes at least a code of indicating turning up and down the volume.
